# EUROPEAN PATENT SPECIFICATION

(11) **EP 2 742 266 B1**
(45) Date of publication and mention of the grant of the patent: **10.01.2018**
(21) Application number: 12748102.6
(22) Date of filing: 07.08.2012
(51) Int. Cl.: F16K 11/20

(54) **FLUID VALVES HAVING MULTIPLE FLUID FLOW CONTROL MEMBERS**
FLÜSSIGKEITSVENTILE MIT MEHREREN DURCHFLUSSREGELELEMENTEN
VANNE DE FLUIDE COMPORTANT DE MULTIPLES ÉLÉMENTS DE COMMANDE DE DÉBIT DE FLUIDE

(30) Priority: 11.08.2011 US 201161522334 P
(43) Date of publication of application: 18.06.2014
(73) Proprietor: Fisher Controls International LLC, Marshalltown, IA 50158 (US)
(72) Inventor: ANAGNOS, Richard James, Conrad, IA 50621 (US)
(74) Representative: Hardy, Rosemary
(86) International application number: PCT/US2012/049811
(87) International publication number: WO 2013/022867

(56) References cited:
- DE-B- 1 163 622
- US-A- 5 469 880
- US-B1- 6 293 300

## Description

### FIELD OF THE DISCLOSURE

This patent relates to fluid valves and, more specifically, to fluid valves having multiple fluid flow control members.

### BACKGROUND

Process control systems use a variety of field devices to control process parameters. For example, a three-way fluid valve may be employed for use with converging applications (i.e., directing fluid flow from one of two inlets to a common outlet), or diverting applications (i.e., directing fluid flow from a common inlet to one of two outlets). A three-way valve typically includes a valve body defining a first fluid flow passageway between a first port and a second port of the fluid valve and a second fluid flow passageway between the first port and a third port of the fluid valve. To control the fluid flow through the respective first and second fluid flow passageways, a three-way valve typically employs a flow control member that moves relative to a first valve seat of the first passageway and a second valve seat of the second passageway.

However, in a three-way valve, the valve plug can only sealingly engage one of the valve seats at a time. In other words, the flow control member is not capable of simultaneously engaging the first and second valve seats to prevent or restrict fluid flow through both passageways at the same time. As a result, additional upstream and/or downstream fluid flow control devices are necessary to prevent fluid flow through all the ports of the fluid valve simultaneously.

Fluid valves having multiple fluid flow control members wherein the stems that couple each of the control members are axially aligned and operate independent of one another within different passageways are found in U.S. Patent No. 5,469,880 issued November 28, 1995; U.S. Patent No. 6,293,300 issued September 25, 2001; and German Patent No. DE 11 63 622 B issued February 20, 1964. However, none of these references teaches a bonnet defining a cavity to retain packing to seal a first stem with respect to an opening in the bonnet and a first valve stem defining a cavity for retaining packing to seal an outer surface of a second valve stem and inner surface of the first valve stem.

### SUMMARY

The invention relates to a fluid valve as defined in independent claim 1. Further optional features are defined in the dependent claims.

### BRIEF DESCRIPTION OF THE DRAWINGS

FIG. 1 depicts a known three-way valve for use with a diverting application.
FIG. 2 depicts another known three-way valve for use with a converging application.
FIG. 3 depicts an example an example three-way valve described herein for use with a diverting application.
FIG. 4 depicts a cross-sectional view of a valve trim apparatus of the example three-way valve of FIG. 3.
FIG. 5 depicts an example an example three-way valve described herein for use with a converging application.
FIG. 6 depicts another example three-way valve described herein shown in a closed position.
FIG. 7 depicts another example three-way valve described herein shown in a first position.
FIG. 8 depicts the example three-way valve of FIG. 7 in a second position.
FIG. 9 depicts the example three-way valve of FIG. 7 in a third position.

### DETAILED DESCRIPTION

The examples described herein relate to fluid valves having multiple fluid flow control members (e.g., valve plugs) or valve trim apparatus. More specifically, the fluid flow control members described herein control fluid flow through multiple orifices and/or passageways of a fluid valve. In particular, the example fluid flow control members described herein may independently control fluid flow through the respective fluid flow passageways. In this manner, the example flow control members described herein may be simultaneously positioned to sealingly engage respective valve seats to prevent or restrict fluid flow through all of the respective fluid flow passageways of the fluid valve (e.g., a closed position of the fluid valve) simultaneously. As a result, additional shut-off valves or flow control devices are not required upstream and/or downstream from passageways of the fluid valve to prevent or restrict fluid flow through all the passageways simultaneously. In contrast, conventional three-way fluid valves, for example, can only prevent or restrict fluid flow through only one of the passageways at a time.

To move a first flow control member described herein independently of and relative to a second flow control member described herein, the examples described herein may include a first valve trim apparatus slidably coupled relative to a second valve trim apparatus. For example, a first valve trim apparatus described herein may have a first control member operatively coupled to a first actuator via a first valve stem and a second valve trim apparatus described herein may have a second flow control member operatively coupled to a second actuator via a second valve stem, where the first valve stem is slidably coupled to the second valve stem. In particular, the first valve stem may include an aperture to slidably receive the second valve stem such that the second valve stem slides relative to, through or within the first valve stem and the first valve stem slides relative to, about or over the second valve stem. In some examples, a first valve stem described herein may provide a sleeve-like structure to slidably receive a second valve stem having a rod-like structure.

Additionally, because each of the actuators may move the first valve stem independently from the second valve stem, the first flow control member may be positioned relative to a first valve seat to provide a first fluid flow opening or rate through a first passageway that varies independently from a second fluid flow opening or rate through a second passageway provided by the position of the second flow control member relative to the second valve seat.

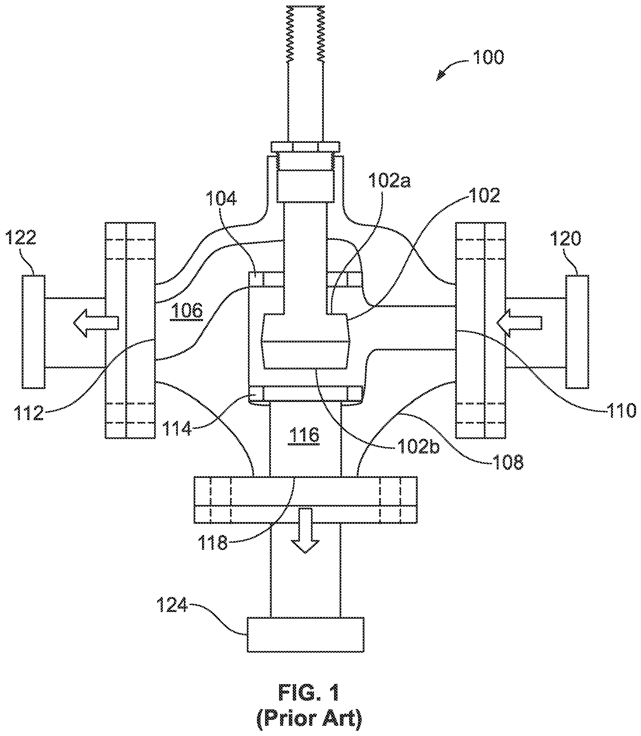

FIG. 1 depicts a known three-way fluid valve 100. The fluid valve 100 includes a valve plug 102 (e.g., a double valve plug) having a first side 102a that moves relative to a first valve seat 104 to control fluid flow through a first fluid passageway 106 of a valve body 108 between a first port or inlet 110 and a second port or outlet 112. The valve plug 102 has a second side 102b that moves relative to a second valve seat 114 to control fluid flow through a second fluid passageway 116 of the valve body 108 between the first port 110 and a third port or outlet 118.

In operation, an actuator (not shown) moves the valve plug 102 relative to the first valve seat 104 and the second valve seat 114. For example, at a zero-percent stroke-length position of the actuator, the valve plug 102 sealingly engages the first valve seat 104 to restrict fluid flow through the first passageway 106 and the valve plug 102 is in a fully open position relative to the second valve seat 114 to allow fluid flow through the second passageway 116. At a one-hundred percent stroke-length position of the actuator, the valve plug 102 is in a fully open position relative to the first valve seat 104 to allow fluid flow through the first passageway 106 and sealingly engages the second valve seat 114 to restrict fluid flow through the second passageway 116.

Thus, the valve plug 102 can only sealingly engage one of the valve seats 104, 114 to prevent or restrict fluid flow through only one of the fluid flow passageways 106 or 116 at the same time or a particular instance.

To prevent or restrict fluid flow through both of the fluid flow passageways 106 and 116 simultaneously, one or more shut-off valves or flow control devices 120, 122 and/or 124 are fluidly coupled upstream and/or downstream from the respective fluid ports 110, 112 and/or 118. In this manner, for example, when the valve plug 102 sealingly engages the first valve seat 104, the shut-off valve 120 upstream of the port 110 and/or the shut-off valve 124 downstream of the port 118 may be moved to a closed position to prevent fluid flow through the second passageway 116 when the valve plug 102 is in sealing engagement with the first valve seat 104. Such additional flow control devices 120, 122, 124 increase manufacturing costs and/or increase the complexity and design of a process system.

Additionally or alternatively, when the position of the valve plug 102 is moved to a 25-percent stroke-length position relative to the first valve seat 104, the valve plug 102 is also positioned at a 75-percent stroke-length position relative to the second valve seat 114, provided that a zero-percent stroke position of an actuator causes the valve plug 102 to move to a closed position relative to the first valve plug 104 and a fully open position relative to the second valve seat 114. Thus, a fluid flow opening or rate through the first passageway 106 varies inversely relative to a fluid flow opening or rate through the second passageway 116.

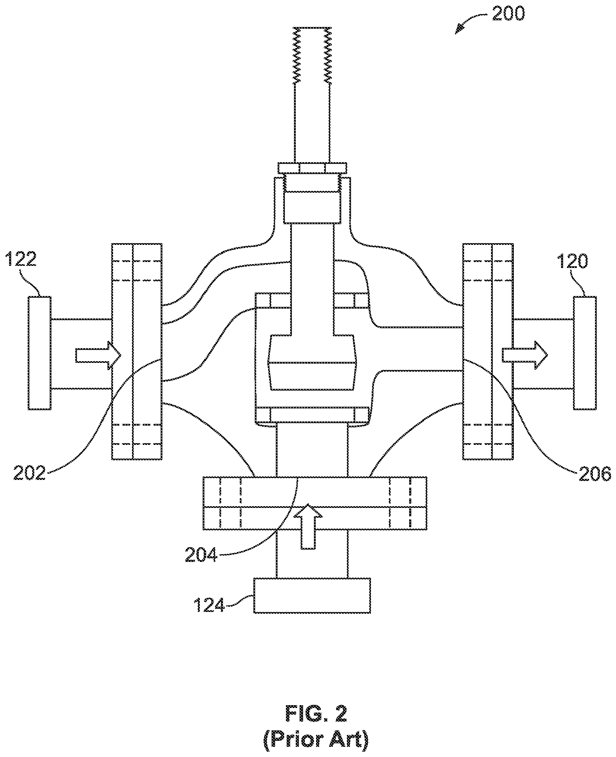

The known valve 100 of FIG. 1 is configured for use as a flow diverting fluid valve that directs fluid flow from the common inlet 110 to one or both of the outlets 112, 118. However, in other examples, a known fluid valve may be configured as a flow converging fluid valve 200, as shown in FIG. 2, for mixing and converging fluid flow from the respective inlets 202, 204 to a common outlet 206. As with the valve 100 of FIG. 1, the additional flow control devices 120, 122, 124 may also used with the fluid valve 200 of FIG. 2 to prevent or restrict fluid flow through the fluid valve 200 between both inlets 202, 204 and the outlet 206 simultaneously.

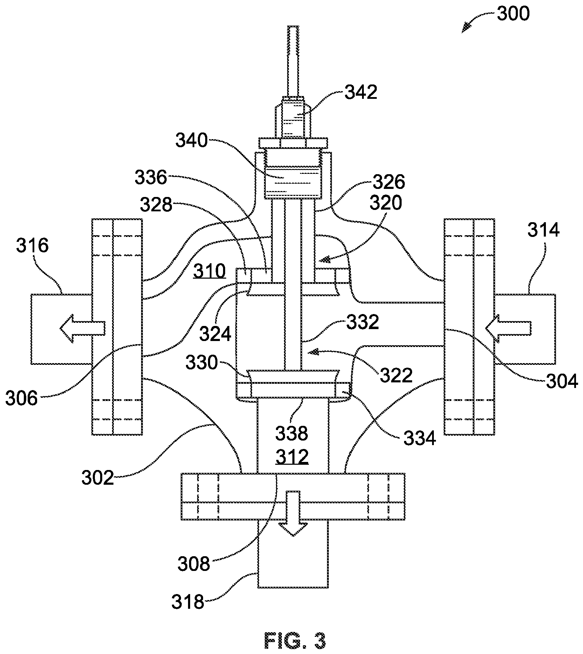

FIG. 3 illustrates an example three-way fluid valve 300 described herein that may be used for a diverting application. In particular, the example fluid valve 300 enables simultaneous shut-off to prevent or restrict all fluid flow through the fluid valve 300.

The fluid valve 300 of FIG. 3 includes a valve body 302 having a first port 304, a second port 306 and a third port 308. The valve body 302 defines a first fluid flow path or passageway 310 between the first port 304 and the second port 306 and a second fluid flow path or passageway 312 between the first port 304 and the third port 308. For example, as shown, the first port 304 may be an inlet fluidly coupled to an upstream fluid source via piping 314 and the second and third ports 306 and 308 may be outlet ports fluidly coupled to downstream fluid sources via respective piping 316 and 318.

Unlike the fluid valve 100 of FIG. 1, the example fluid valve 300 of FIG. 3 includes a first valve trim apparatus or assembly 320 to control fluid flow through the first passageway 310 and a second valve trim apparatus or assembly 322 to control fluid flow through the second passageway 312. In particular, the first valve trim apparatus 320 is slidably coupled relative to the second valve trim apparatus 322 to enable the valve trim apparatus 320 and 322 to slide relative to each other. As shown, the first valve trim apparatus 320 slides relative to the second valve trim apparatus 322, and the second valve trim apparatus 322 slides relative to the first valve trim apparatus 320. Additionally or alternatively, as described in greater detail below, the first valve trim apparatus 320 and the second valve trim apparatus 322 can be moved independently relative to each other.

In the illustrated example of FIG. 3, the first valve trim apparatus 320 includes a first flow control member 324 (e.g. a valve plug), a first or outer valve stem 326 and a first valve seat 328. The second valve trim apparatus 322 includes a second flow control member 330 (e.g., a valve plug), a second or inner valve stem 332 and a second valve seat 334. As shown in FIG. 3, the first flow control member 324 (e.g., a valve plug) slidably receives the second flow control member 330. More specifically, the first valve stem 326 is a sleeve-like structure that slidably receives the second valve stem 332, which is a rod-like structure.

The first valve seat 328 is disposed within the first passageway 310 to define a first orifice 336 of the first passageway 310 and the second valve seat 334 is disposed within the second passageway 312 to define a second orifice 338 of the second passageway 312. In operation, the first flow control member 324 moves relative to the first valve seat 328 to control or modulate fluid flow through the first passageway 310 and the second flow control member 330 moves relative to the second valve seat 334 to control or modulate fluid flow through the second passageway 312. In particular, as described in greater detail below, the first flow control member 324 moves independently relative to the second flow control member 330.

The first valve trim apparatus 320 of the illustrated example also includes a first seal or packing system 340 to prevent fluid leakage to the environment via the first valve stem 326. Similarly, the second valve trim apparatus 322 of the illustrated example includes a second seal or packing system 342 to prevent fluid leakage to the environment via the second valve stem 332.

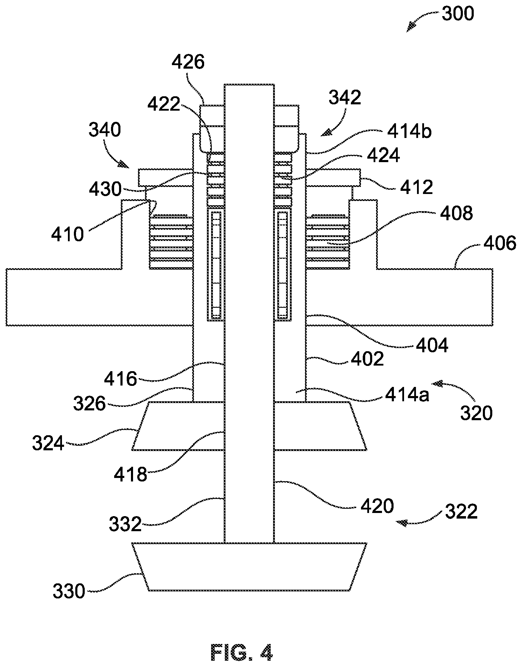

FIG. 4 illustrates a cross-sectional view of the example valve trim apparatus 320 and 322 of FIG. 3. As shown in FIG. 4, the first valve stem 326 has an outer surface 402 that slidably engages an opening 404 of a bonnet 406 of the fluid valve 300. The first packing system 340 (e.g., a live-loaded packing) includes packing or seals 408 (e.g., graphite rings, PTFE rings, etc.) that are disposed in a cavity 410 of the bonnet 406 adjacent the opening 404. A packing retainer or follower 412 retains the packing 408 within the cavity 410. The packing system 342 seals the outer surface or diameter of the first valve stem 326 and an inner surface or diameter of the opening 404 to prevent or restrict fluid leakage along the first valve stem 326 and to the environment via the opening 404 of the bonnet 406.

The first flow control member 324 is coupled to a first end 414a of the first valve stem 326. Additionally, the first valve stem 326 and the first flow control member 324 have respective apertures 416 and 418 to slidably receive the second valve stem 332. For example, each of the apertures 416 and 418 of the respective valve stem 332 and the first flow control member 324 has an opening or diameter that is sized to receive (e.g., is smaller than) an outer surface or diameter 420 of the second valve stem 332. In this manner, the second valve stem 332 slides relative to, within or through the first valve stem 326 and the first flow control member 324. As shown in FIG. 4, the aperture 416 of the first valve stem 326 is adjacent the first end 414a and is coaxially aligned with the aperture 418 of the first flow control member 324.

The first valve stem 326 also includes a cavity 422 adjacent a second end 414b of the first valve stem 326 to receive the second packing system 342. The second packing system 342 (e.g., a live-loaded packing) includes packing or seals 424 (e.g., graphite rings, PTFE rings, etc.) that are disposed within the cavity 422 of the first valve stem 326. A packing retainer or follower 426 retains the packing 424 within the cavity 422. In the illustrated example, the packing system 342 includes an inner opening or diameter that is sized to slidably engage the outer surface 420 of the second valve stem 332 and includes an outer surface or diameter that is sized to fit with an inner opening or diameter 430 of the cavity 422. The second packing system 342 seals the outer surface of the second valve stem 332 and an inner surface or diameter of the first valve stem 330 to prevent fluid leakage along the second valve stem 332 and to the environment via the bonnet 406 and the respective apertures 416 and 418 of the first valve stem 326 and the first flow control member 324.

Thus, the first valve stem 326 moves or slides relative to the opening 404 of the bonnet 406 and the packing system 340 and the second valve stem 332 moves or slides relative to the packing system 342 and the apertures 416 and 418 of the first valve stem 326 and the first flow control member 324.

In the example of FIGS. 3 and 4, the valve stems 326 and 332 have a cylindrically-shaped profile or circular cross-sectional shapes. However, in other examples, each of the valve stems 326 and 332 may have a square-shaped profile or cross-sectional shape, a rectangular-shaped profile or cross-sectional shape, or any other suitable profile(s) and/or cross-sectional shape(s).

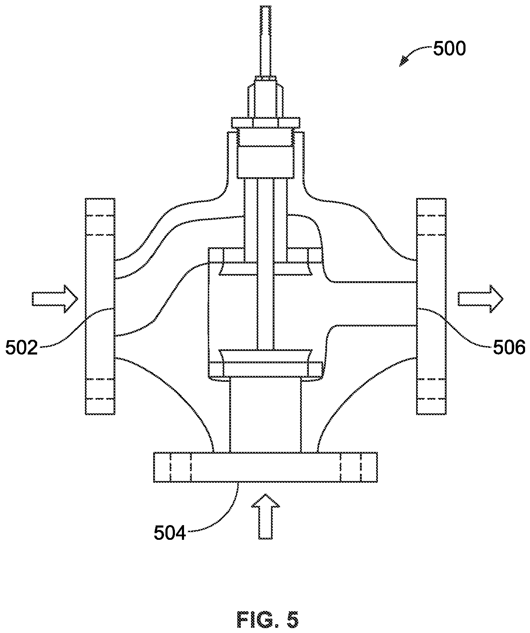

The example fluid valve 300 of FIG. 3 is configured for use as a flow diverting fluid valve that directs fluid flow from the common inlet 304 to one (or both) of the outlets 306, 308. However, in other examples, the example valve trim apparatus 320 and 322 described herein may be employed with an example three-way fluid valve 500 for use with converging applications for mixing fluid flow from two respective inlets 502, 504 to a common outlet 506 as shown in FIG. 5.

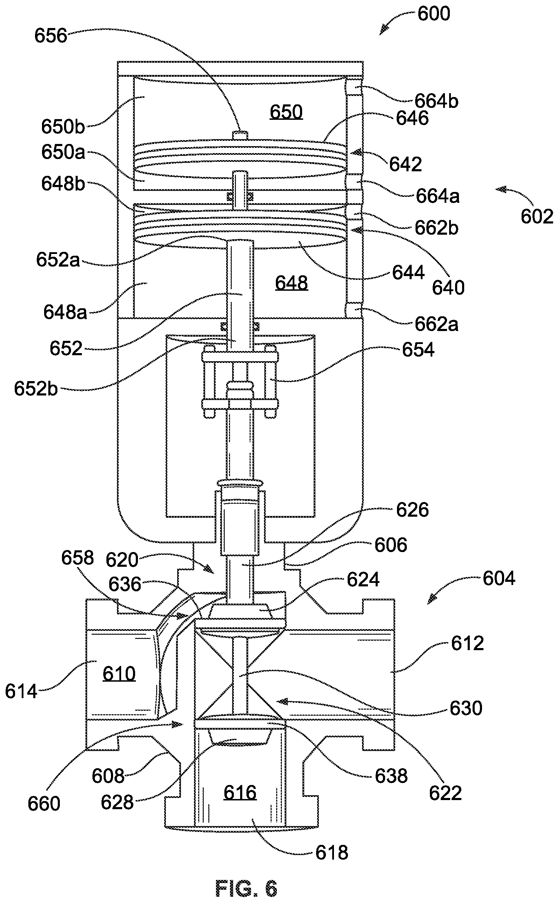

FIG. 6 depicts an example fluid control valve assembly 600 described herein. The fluid control valve assembly 600 includes an actuator 602 (e.g., a pneumatic actuator, a hydraulic actuator, etc.) coupled to a fluid valve 604 via a bonnet 606. The fluid valve 604 has a valve body 608 that defines a first fluid flow path or passageway 610 between a first port 612 and a second port 614 and a second fluid flow path or passageway 616 between the first port 612 and a third port 618. The example fluid valve 604 includes a first valve trim apparatus 620 and a second valve trim apparatus 622. More specifically, the valve trim apparatus 620 and 622 are slidably coupled to each other to enable the first valve trim apparatus 620 to slide relative to the second valve trim apparatus 622.

The first valve trim apparatus 620 includes a flow control member 624 (e.g., a valve plug) coupled to a first valve stem 626 (e.g., a sleeve) and the second valve trim apparatus 622 includes a second flow control member 628 (e.g., a valve plug) coupled to a second valve stem 630 (e.g., a rod). More specifically, the first valve stem 626 and the first flow control member 624 slidably receive the second valve stem 630. Although not shown, each of the valve trim apparatus 620 and 622 of FIG. 6 employs a seal or packing system (e.g., similar to the packing systems 340 and 342 of FIG. 3) to prevent fluid leakage to the environment via outer surfaces of the first and second valve stems 626 and 628.

The first flow control member 624 moves relative to a first seal or valve seat 636 disposed within the first passageway 610 to control or modulate the fluid flow through the first passageway 610 and the second flow control member 628 moves relative to a second seal or valve seat 638 disposed within the second passageway 612 to control or modulate fluid flow through the second passageway 612.

In particular, the first flow control member 624 sealingly engages the valve seat 636 of the first passageway 610 to restrict or prevent fluid flow through the first passageway 610 and moves away from the valve seat 636 to allow fluid flow through the first passageway 610. Likewise, the second flow control member 628 sealingly engages the valve seat 638 of the second passageway 616 to restrict or prevent fluid flow through the second passageway 616 and moves away from the valve seat 638 to allow fluid flow through the second passageway 616.

In the illustrated example, the actuator 602 moves the first and second flow control members 624 and 628 relative to the respective valve seats 636 and 638 independently of each other. The actuator 602 shown in FIG. 6 includes a first pressure sensor 640 operatively coupled to the first flow control member 624 via the first valve stem 626 and a second pressure sensor 642 operatively coupled to the second flow control member 628 via the second valve stem 630. In the illustrated example, the pressure sensors 640 and 642 of the actuator 602 are depicted as pistons 644 and 646, respectively. However, in other examples, the pressure sensors 640 and 642 may be diaphragms or any other suitable pressure sensor(s).

The first piston 644 is disposed within a first actuator chamber 648 to define a first control chamber 648a and a second control chamber 648b. Similarly, the second piston 646 is disposed within a second actuator chamber 650 to define a third control chamber 650a and a fourth control chamber 650b. The actuator chambers 648 and 650 are integrally formed with a housing or casing of the actuator 602.

The actuator 602 also includes an actuator stem 652 to operatively couple the first valve stem 626 and the first piston 644. As shown, the actuator stem 652 may be integrally formed with the piston 644 and/or may be coupled to the piston 644 via a fastener, welding, etc., at a first end 652a. A second end 652b of the actuator stem 652 is coupled to the first valve stem 626 via a connector 654. Additionally, the actuator stem 652 and the piston 644 each include an aperture or opening (not shown) to slidably receive the second valve stem 630, which is coupled to the second piston 646 via a fastener 656. Thus, the first piston 644 moves the first flow control member 624 relative to the valve seat 636 via the first valve stem 626, the actuator stem 652 and the connector 654. Similarly, the second piston 646 moves the second flow control member 628 relative to the second valve seat 638 via the second valve stem 630 that slidably moves through the first piston 644, the actuator stem 652, the first valve stem 626 and the first flow control member 624.

The first piston 644 can operate independently from the second piston 646. As a result, the first piston 644 can operate or move the first flow control member 624 independently from the second flow control member 628. Likewise, the second piston 646 can operate or move the second flow control member 628 independently from the first flow control member 624. For example, as shown in FIG. 6, both of the flow control members 624 and 628 are in respective closed positions 658 and 660. Thus, unlike the fluid valves 100 and 200 of FIGS. 1 and 2, the first flow control member 624 and the second flow control member 628 may be positioned in their respective closed positions 658 and 660 to prevent or restrict fluid flow through both of the passageways 610 and 616 simultaneously.

In operation, independent movement of the pistons 644 and 646 is controlled via a pressure differential provided across the respective pistons 644 and 646. More specifically, movement of the first piston 644 and, thus, the first flow control member 624, is controlled by conveying fluid (e.g., pressurized fluid) into and out of ports 662a and 662b, and movement of the second piston 646 and, thus, the second flow control member 628, is controlled by conveying fluid (e.g., pressurized fluid) into and out of ports 664a and 664b.

For example, a control fluid (e.g., pressurized air) is provided to, or exhausted from, the first and second chambers 648a and 648b via respective ports 662a and 662b to provide a pressure differential across the first piston 644 to move the first flow control member 624 relative to the first valve seat 636 and/or the second valve trim apparatus 622. Likewise, a control fluid (e.g., pressurized air) is provided to, or exhausted from, the third and fourth chambers 650a and 650b via respective ports 664a and 664b to provide a pressure differential across the second piston 646 to move the second flow control member 628 relative to the second valve seat 638 and/or the first valve trim apparatus 620. Additionally, although not shown, the example fluid valve assembly 600 may include duel control devices, positioners, and/or transmitters operatively coupled to each of the flow control devices 624 and 628 to detect or provide an indication of their respective positions (e.g., stroke-length positions).

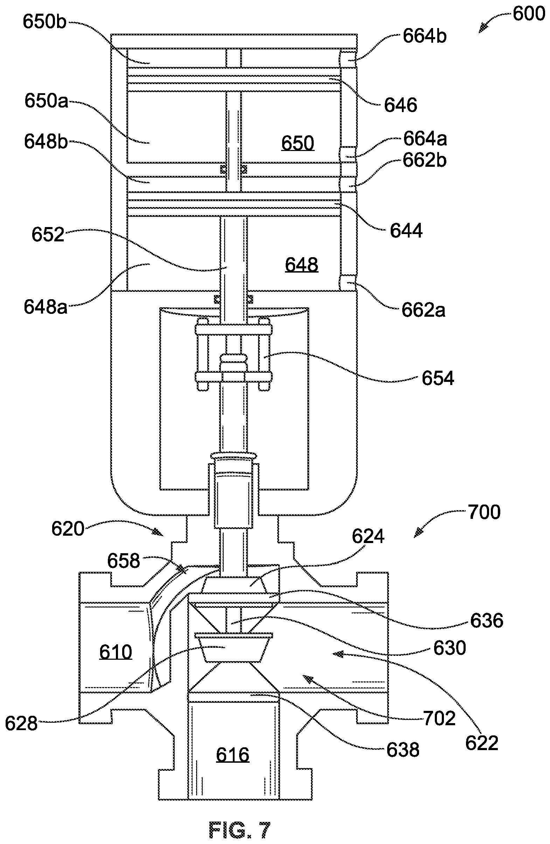

FIG. 7 illustrates the example fluid control valve 600 of FIG. 6 in a first position 700. For example, in the first position 700, the second flow control member 628 is positioned away from the second valve seat 638 to an open position 702 to allow fluid flow through the second passageway 616 and the first flow control member 624 is positioned in the closed position 658 to prevent or restrict fluid flow through the first passageway 610. To move the second flow control member 628 away from the valve seat 638 to the open position 702, a pressurized fluid is provided in the third chamber 650a via the port 664a having a greater pressure than the pressure of a fluid in the fourth chamber 650b such that the pressure differential across the piston 646 causes the piston 646 to move toward the fourth chamber 650b (e.g., an upward direction in the orientation of FIG. 7). As the piston 646 moves toward the fourth chamber 650b, the piston 646 causes the second valve stem 630 to move toward the fourth chamber 650b, thereby causing the second flow control member 628 to move toward the first flow control member 624 and away from the valve seat 638. In particular, the second valve stem 630 slides relative to and/or or through the first flow control member 624, the first valve stem 626, the actuator stem 652 and the first piston 644, each of which has an aperture or opening coaxially aligned to receive the second valve stem 630.

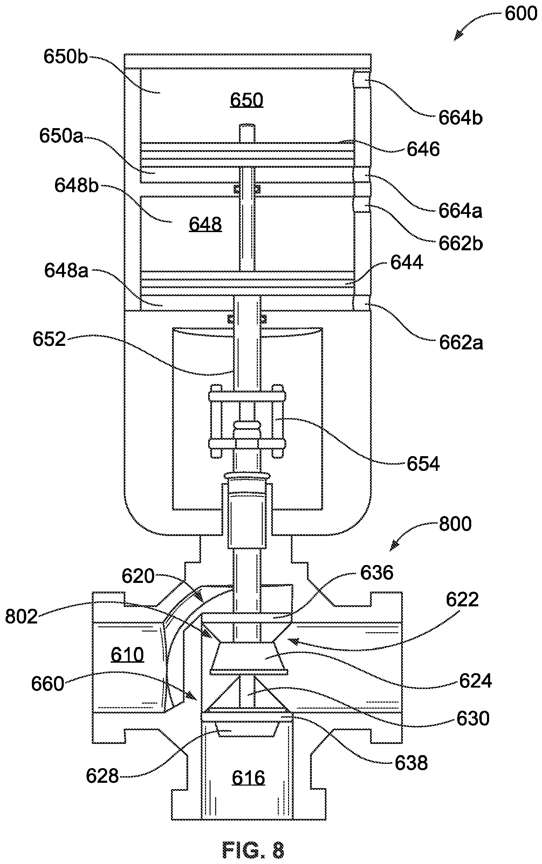

FIG. 8 illustrates the example fluid control valve 600 of FIG. 6 in a second position 800. In the second position 800, the first flow control member 624 is an open position 802 (away from the valve seat 636) to allow fluid flow through the first passageway 610 and the second flow control member 628 is in the closed position 660 to restrict or prevent fluid flow through the second passageway 616. For example, to move the first flow control member 624 away from the first valve seat 636 and to the open position 802, a pressurized fluid provided to the second chamber 648b via the port 662b has a greater pressure than the pressure of a fluid in the first chamber 648a such that the pressure differential across the first piston 644 causes the first piston 644 to move toward the first chamber 648a (e.g., in a downward direction in the orientation of FIG. 8). As the piston 644 moves toward the first chamber 648a, the actuator stem 652 causes the first valve stem 626 to move toward the second flow control member 628 via the connector 654, thereby causing the first flow control member 624 to move toward the second flow control member 628 and away from the valve seat 636. In particular, the first valve stem 626 slides relative to, over and/or about the second valve stem 630. In particular, the first flow control member 624, the first valve stem 626, the actuator stem 652 and the first piston 644 slidably move about, over, around or relative to the second valve stem 630. Thus, the second valve stem 630 may provide a guide to the first flow control member 624, the first valve stem 626 and the actuator stem 652 when the first valve trim apparatus 620 slidably moves relative to the second valve trim apparatus 622.

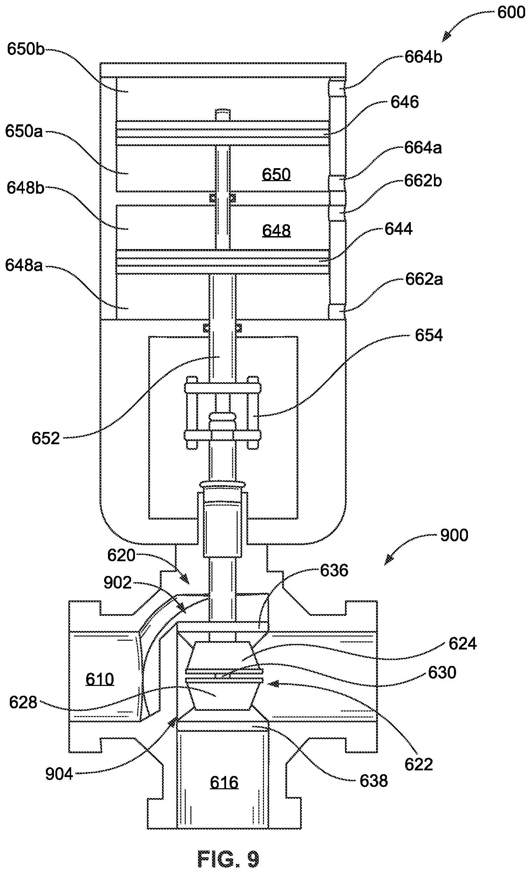

FIG. 9 illustrates the example fluid control valve 600 of FIG. 6 in a third position 900. For example, in the third position 900, the first flow control member 624 may be at first position or distance 902 away from the first valve seat 636 (e.g., a stroke-length of the first piston 644) to allow fluid flow through the first passageway 610 and the second flow control member 628 may be at a second position or distance 904 away from the second valve seat 638 (e.g., a stroke-length of the second piston 646) to allow fluid flow through the second passageway 616. In particular, the stroke-length position of the first piston 644 is independent of the stroke-length position of the second piston 646. Thus, a first flow rate may be provided through the first passageway 610 that is substantially equal to, or different than, a second flow rate provided through the second passageway 616. In contrast to the fluid valves 100 and 200 of FIGS. 1 and 2, the position of the first flow control member 624 relative to the first valve seat 636 does not depend on the position of the second fluid flow control member 628 relative to the second valve seat 638.

For example, the first flow control member 624 may be positioned to a 10-percent stroke-length position of the first piston 644 and the second fluid flow control member 628 may be positioned to a 30-percent stroke-length position of the second piston 646. In other examples, the positions of the flow control members 624 and 628 may be complementary or may coincide such that the first stroke-length position is 10-percent of the stroke-length of the first piston 644 and the second stroke-length position is 90-percent of the stroke-length of the second piston 646. Additionally or alternatively, the flow control members 624 and 628 may be at any positions relative to each other and/or their respective valve seats 636 and 638.

Thus, unlike the example fluid valves 100 and 200 of FIGS. 1 and 2, the example fluid valves 300 and 600 described herein include the first flow control member 324, 624 and the second flow control member 330, 628, which may be positioned or operated independently of each other. In this manner, the fluid valves 300 and 600 may be moved to a closed position to prevent or restrict fluid flow through the fluid valves 300 and 600 without requiring additional shut-off devices or configurations similar to those required with the fluid valves 100 and 200 of FIGS. 1 and 2.

Additionally or alternatively, unlike the fluid flow valves 100 and 200 of FIGS. 1 and 2, the example valve trim apparatus 320, 322, 620 and 622 of the fluid valves 300 and 600 described herein enable an opening or flow rate through a first passageway (e.g., the passageways 310, 610) to be independent of an opening or flow rate through a second passageway (e.g., the passageways 312, 616). For example, if the first flow control member 624 is positioned at a 25 percent stroke-length position of the first piston 644, the second flow control member 628 does not have to be positioned at a 75 percent stroke-length position of the second piston 646 as required by the fluid flow valves 100 and 200 of FIGS. 1 and 2. Thus, the example first flow control member 324, 624 may be positioned relative to the first valve seat 328, 636 independent from the position of the second flow control member 330, 628 relative to the second valve seat 334, 638.

Although certain example methods, apparatus and articles of manufacture have been described herein, the scope of coverage of this patent is not limited thereto. On the contrary, this patent covers all methods, apparatus and articles of manufacture falling within the scope of the appended claims.

## Claims

1. A fluid valve (300; 500; 600), comprising:
a valve body (302; 608) defining a first passageway (310; 610) between a first port (304; 506; 612) and a second port (306; 502; 614) and a second passageway (312; 616) between the first port (304; 506; 612) and a third port (308; 504; 618);
a first flow control member (324; 624) disposed in the first passageway (310; 610) to control fluid flow through the first passageway (310; 610) wherein the first flow control member (324; 624) is operatively coupled to a first actuator component (640) via a first valve stem (326; 626); and
a second flow control member (330; 628) disposed in the second passageway (312; 616) to control fluid flow through the second passageway (312; 616) wherein the second flow control member (330; 628) is operatively coupled to a second actuator component (642) via a second valve stem (332; 630), wherein the second flow control member (330; 628) is slidably coupled to the first flow control member (324; 624), and a bonnet (406) defines an opening (404) for receiving the first valve stem (326; 626) and defines a cavity (410) for retaining first packing (408) which seals the first valve stem (326; 626) and the opening (404);
the first valve stem (326; 626) defines a cavity (422) for retaining second packing (424) which seals an outer surface (420) of the second valve stem (332; 630) and an inner surface of the first valve stem (326; 626); **characterized in that**
a packing retainer (426) is arranged to retain the second packing (424) within the cavity (422).

2. A fluid valve (300; 500; 600) as defined in claim 1, wherein the first flow control member (324; 624) moves independently of the second fluid flow control member (330; 628).

3. A fluid valve (300; 500; 600) as defined in claim 1, wherein the first flow control member (324; 624) is movable relative to a first orifice (336) of the first passageway (310; 610) via the first valve stem (326: 626) and the second flow control member (330: 628) is movable relative to a second orifice (338) of the second passageway (312; 616) via the second valve stem (332; 630).

4. A fluid valve (300; 500; 600) as defined in any of the preceding claims, wherein the first valve stem (326; 626) includes an aperture (416) to slidably receive the second valve stem (332; 630).

5. A fluid valve (300; 500; 600) as defined in any of the preceding claims, wherein the first valve stem (326; 626) is slidably disposed within the opening (404) of the bonnet (406).

6. A fluid valve (300; 500; 600) defined in any of the preceding claims, further comprising a first valve seat (328; 636) disposed in the first passageway (310; 610) and a second valve seat (334; 638) disposed in the second passageway (312; 616).

7. A fluid valve (300; 500; 600) as defined inclaim 6, wherein the first flow control member (324; 624) sealingly engages the first valve seat (328; 636) to prevent or restrict fluid flow through the first passageway (310; 610) and the second flow control member (330; 628) sealingly engages the second valve seat (334; 638) to prevent or restrict fluid flow through the second passageway (312; 616) simultaneously at a particular instance.

8. A fluid valve (300; 500; 600) as defined in claim 6 or 7, wherein the first port (304; 506; 612) comprises an outlet (506), the second port (306; 502; 614) comprises a first inlet (502), and the third port (308; 504; 618) comprises a second inlet (504), and wherein the first and second flow control members (324, 330; 624, 628) are movable away from the first and second valve seats (328, 334; 636, 638), respectively, to enable a first process fluid from the first inlet (502) to mix with a second process fluid from the second inlet (504) as the first and second process fluids flow toward the outlet (506).

## Patentansprüche

1. Ein Fluidventil (300, 500, 600), welches aufweist:
einen Ventilkörper (302, 608), der einen ersten Durchgang (310, 610) zwischen einem ersten Anschluss (304, 506, 612) und einem zweiten Anschluss (306, 502, 614) und einen zweiten Durchgang (312, 616) zwischen dem ersten Anschluss (304, 506, 612) und einem dritten Anschluss (308, 504, 618) bestimmt,
ein erstes Flusssteuerelement (324, 624), das in dem ersten Durchgang (310, 610) angeordnet ist, um den Fluidfluss durch den ersten Durchgang (310, 610) zu steuern, wobei das erste Flusssteuerelement (324, 624) in einer wirkenden Weise mit einer ersten Betätigungskomponente (640) über einen ersten Ventilschaft (326, 626) verbunden ist, und
ein zweites Flusssteuerelement (330, 628), das in dem zweiten Durchgang (312, 616) angeordnet ist, um den Fluidfluss durch den zweiten Durchgang (312, 616) zu steuern, wobei das zweite Flusssteuerelement (330, 628) in einer wirkenden Weise mit einer zweiten Betätigungskomponente (642) über einen zweiten Ventilschaft (332, 630) verbunden ist, wobei das zweite Flusssteuerelement (330, 628) verschiebbar mit dem ersten Flusssteuerelement (324, 624) verbunden ist, und
einen Aufsatz (406), der eine Öffnung (404) zum Aufnehmen des ersten Ventilschafts (326, 626) bestimmt und der einen Hohlraum (410) zum Halten der ersten Dichtung (408) bestimmt, die den ersten Ventilschaft (326, 626) und die Öffnung (404) abdichtet,
wobei der erste Ventilschaft (326, 626) einen Hohlraum (422) zum Halten der zweiten Dichtung (424) bestimmt, die eine äußere Oberfläche (420) des zweiten Ventilschafts (332, 630) und eine innere Oberfläche des ersten Ventilschafts (326, 626) abdichtet, **dadurch gekennzeichnet, dass**
ein Dichtungshalter (426) angeordnet ist, um die zweite Dichtung (424) in dem Hohlraum (422) zu halten.

2. Fluidventil (300, 500, 600) nach Anspruch 1, wobei sich das erste Flusssteuerelement (324, 624) unabhängig von dem zweiten Flusssteuerelement (330, 628) bewegt.

3. Fluidventil (300, 500, 600) nach Anspruch 1, wobei das erste Flusssteuerelement (324, 624) in Bezug zu einer ersten Öffnung (336) des ersten Durchgangs (310, 610) über den ersten Ventilschaft (326, 626) bewegbar ist und wobei das zweite Flusssteuerelement (330, 628) in Bezug zu einer zweiten Öffnung (338) des zweiten Durchgangs (312, 616) über den zweiten Ventilschaft (332, 630) bewegbar ist.

4. Fluidventil (300, 500, 600) nach einem der vorhergehenden Ansprüche, wobei der erste Ventilschaft (326, 626) eine Öffnung (416) aufweist, um den zweiten Ventilschaft (332, 630) verschiebbar aufzunehmen.

5. Fluidventil (300, 500, 600) nach einem der vorhergehenden Ansprüche, wobei der erste Ventilschaft (326, 626) verschiebbar in der Öffnung (404) des Aufsatzes (406) angeordnet ist.

6. Fluidventil (300, 500, 600) nach einem der vorhergehenden Ansprüche, welches ferner einen ersten Ventilsitz (328, 636), der in dem ersten Durchgang (310, 610) angeordnet ist, und einen zweiten Ventilsitz (334, 638) aufweist, der in dem zweiten Durchgang (312, 616) angeordnet ist.

7. Fluidventil (300, 500, 600) nach Anspruch 6, wobei das erste Flusssteuerelement (324, 624) mit dem ersten Ventilsitz (328, 636) in einem abdichtenden Eingriff steht, um einen Fluidfluss durch den ersten Durchgang (310, 610) zu verhindern oder einzuschränken, und wobei das zweite Strömungssteuerelement (330, 628) mit dem zweiten Ventilsitz (334, 638) in einem abdichtenden Eingriff steht, um einen Fluidfluss durch den zweiten Durchgang (312, 616) in einem bestimmten Fall gleichzeitig zu verhindern oder einzuschränken.

8. Fluidventil (300, 500, 600) nach Anspruch 6 oder 7, wobei der erste Anschluss (304, 506, 612) einen Auslass (506) aufweist, der zweite Anschluss (306, 502, 614) einen ersten Einlass aufweist (502), und der dritte Anschluss (308, 504, 618) einen zweiten Einlass (504) aufweist, und wobei das erste Flusssteuerelement und das zweite Flusssteuerelement (324, 330, 624, 628) von dem ersten bzw. dem zweiten Ventilsitz (328, 334, 636, 638) wegbewegt werden können, um zu ermöglichen, dass sich ein erstes Prozessfluid von dem ersten Einlass (502) mit einem zweiten Prozessfluid von dem zweiten Einlass (504) mischen kann, wenn das erste Prozessfluid und das zweite Prozessfluid in Richtung auf den Auslass (506) fließen.

## Revendications

1. Vanne de fluide (300 ; 500 ; 600), comprenant :
un corps de valve (302 ; 608) définissant une première voie de passage (310 ; 610) entre un premier orifice (304 ; 506 ; 612) et un deuxième orifice (306 ; 502 ; 614) et une seconde voie de passage (312 ; 616) entre le premier orifice (304 ; 506 ; 612) et un troisième orifice (308 ; 504 ; 618) ;
un premier organe de contrôle de flux (324 ; 624) disposé dans la première voie de passage (310 ; 610) pour contrôler un flux de fluide à travers la première voie de passage (310 ; 610), dans laquelle le premier organe de contrôle de flux (324 ; 624) est fonctionnellement couplé à un premier composant actionneur (640) par l'intermédiaire d'une première tige de vanne (326 ; 626) ; et
un second organe de contrôle de flux (330 ; 628) disposé dans la seconde voie de passage (312 ; 616) pour contrôler un flux de fluide à travers la seconde voie de passage (312 ; 616), dans laquelle le second organe de contrôle de flux (330 ; 628) est fonctionnellement couplé à un second composant actionneur (642) par l'intermédiaire d'une seconde tige de vanne (332 ; 630), dans laquelle le second organe de contrôle de flux (330 ; 628) est couplé de façon coulissante au premier organe de contrôle de flux (324 ; 624), et
un chapeau (406) définit une ouverture (404) pour recevoir la première tige de vanne (326 ; 626) et définit une cavité (410) pour retenir une première garniture d'étanchéité (408) qui scelle la première tige de vanne (326 ; 626) et l'ouverture (404) ;
la première tige de vanne (326 ; 626) définit une cavité (422) pour retenir une seconde garniture d'étanchéité (424) qui scelle une surface extérieure (420) de la seconde tige de vanne (332 ; 630) et une surface intérieure de la première tige de vanne (326 ; 626) ; **caractérisée en ce que**
un dispositif de retenue de garniture d'étanchéité (426) est agencé pour retenir la seconde garniture d'étanchéité (424) à l'intérieur de la cavité (422).

2. Vanne de fluide (300 ; 500 ; 600) selon la revendication 1, dans laquelle le premier organe de contrôle de flux (324 ; 624) se déplace indépendamment du second organe de contrôle de flux de fluide (330 ; 628).

3. Vanne de fluide (300 ; 500 ; 600) selon la revendication 1, dans laquelle le premier organe de contrôle de flux (324 ; 624) est déplaçable par rapport à un premier orifice (336) de la première voie de passage (310 ; 610) via la première tige de vanne (326 ; 626) et le second organe de contrôle de flux (330 ; 628) est déplaçable par rapport à un second orifice (338) de la seconde voie de passage (312 ; 616) via la seconde tige de vanne (332 ; 630).

4. Vanne de fluide (300 ; 500 ; 600) selon l'une quelconque des revendications précédentes, dans laquelle la première tige de vanne (326 ; 626) inclut une lumière (416) pour recevoir de façon coulissante la seconde tige de vanne (332 ; 630).

5. Vanne de fluide (300 ; 500 ; 600) selon l'une quelconque des revendications précédentes, dans laquelle la première tige de vanne (326 ; 626) est disposée de façon coulissante à l'intérieur de l'ouverture (404) du chapeau (406).

6. Vanne de fluide (300 ; 500 ; 600) défini dans l'une quelconque des revendications précédentes, comprenant en outre un premier siège de vanne (328 ; 636) disposé dans la première voie de passage (310 ; 610) et un second siège de vanne (334 ; 638) disposé dans la seconde voie de passage (312 ; 616).

7. Vanne de fluide (300 ; 500 ; 600) selon la revendication 6, dans laquelle le premier organe de contrôle de flux (324 ; 624) entre en prise scellée avec le premier siège de vanne (328 ; 636) pour empêcher ou limiter le flux de fluide à travers la première voie de passage (310 ; 610) et le second organe de contrôle de flux (330 ; 628) entre en prise scellée avec le second siège de vanne (334 ; 638) pour empêcher ou limiter le flux de fluide à travers la seconde voie de passage (312 ; 616) simultanément dans un cas particulier.

8. Vanne de fluide (300 ; 500 ; 600) selon la revendication 6 ou 7, dans laquelle le premier orifice (304 ; 506 ; 612) comprend une sortie (506), le deuxième orifice (306 ; 502 ; 614) comprend une première entrée (502), et le troisième orifice (308 ; 504 ; 618) comprend une seconde entrée (504), et dans laquelle les premier et second organes de contrôle de flux (324, 330 ; 624, 628) sont déplaçables pour s'éloigner des premier et second sièges de vanne (328, 334 ; 636, 638), respectivement, pour permettre à un premier fluide de traitement à partir de la première entrée (502) de se mélanger avec un second fluide de traitement à partir de la seconde entrée (504) lorsque les premier et second fluides de traitement s'écoulent vers la sortie (506).
